# EUROPÄISCHE PATENTSCHRIFT

(11) **EP 1 124 415 B1**
(45) Veröffentlichungstag und Bekanntmachung des Hinweises auf die Patenterteilung: **26.05.2004**
(21) Anmeldenummer: 99947424.0
(22) Anmeldetag: 25.09.1999
(51) Int. Cl.: A01N 31/02

(54) **MITTEL ZUR ABWEHR UND INAKTIVIERUNG PATHOGENER ERREGER VON PFLANZEN**
AGENT FOR REPELLING AND INACTIVATING PATHOGENIC ORGANISMS OF PLANTS
PRODUIT PERMETTENT DE LUTTER CONTRE ET DE DESACTIVER LES AGENTS PATHOGENES DE PLANTES

(30) Priorität: 05.11.1998 DE 19850994
(43) Veröffentlichungstag der Anmeldung: 22.08.2001
(73) Patentinhaber: Menno Chemie Vertriebsges. MbH, 22850 Norderstedt (DE)
(72) Erfinder: NEVERMANN, Jan, D-22848 Norderstedt (DE); ZERLING, Wolfgang, D-24568 Kaltenkirchen (DE); HÖFFLER, Jutta, D-20249 Hamburg (DE)
(74) Vertreter: Schaeffer, Michael
(86) Internationale Anmeldenummer: PCT/EP1999/007151
(87) Internationale Veröffentlichungsnummer: WO 2000/027192

(56) Entgegenhaltungen:
- EP-A- 0 091 213
- WO-A-96/11572
- DE-A- 3 229 097
- DE-A- 3 434 885
- DE-A- 4 233 806
- US-A- 4 904 683

## Beschreibung

Alljährlich entstehen Gärtnereien, Meristembetrieben und Pflanzenzüchtern große Schäden durch Erreger, die Setzlinge, Jungpflanzen, Mutterpflanzen und Samen infizieren, wodurch diese vernichtet oder unbrauchbar gemacht werden. Gelangen z.B. Viren in eine Anbaukultur, so kann davon ausgegangen werden, daß 100% der Pflanzen geschädigt sind. Es bleibt den Gärtnereien dann nur noch der radikale Weg, die Gesamtkultur zu vernichten.

Auf dem Markt sind spezifisch wirksame Mittel erhältlich, durch die einige Phytopathogene bekämpft werden können, ohne die Vitalität der Pflanze zu beeinflussen. Diese als Pestizide bezeichneten Mittel sind systemisch wirksam, verfügen aber meist nur über ein schmales Wirkungsspektrum.

Ein wesentlich breiteres Wirkungsspektrum bieten hingegen gängige Desinfektionsmittel auf Basis von Aldehyden, Phenolen, Halogenen, Peroxiden und quartären Ammoniumverbindungen. Gelangen diese "Flächendesinfektionsmittel" auf die Pflanze oder werden direkt appliziert, so hat dies immer eine irreversible Schädigung der Pflanze zur Folge. Dies bedeutet, daß derartige Desinfektionsmittel nur auf Bearbeitungsflächen, Stellflächen und Geräten wie-z.B. Messern usw. eingesetzt werden können. Danach müssen die Flächen von anhaftenden Wirkstoffresten befreit werden, um die Pflanzen bei nachfolgenden Bearbeitungsgängen nicht zu gefährden.

Jedoch selbst auf Flächen ist eine ausreichende Inaktivierung nicht gewährleistet, da diese Mittel immer wieder beträchtliche Wirkungslücken gegenüber phytopathogenen Erregern aufweisen.

Aus der Lehre der DE OS 32 27 126 und DE OS 32 29 097 ist bekannt, daß bestimmte Kombinationen aus anionischen Tensiden, aliphatischen und aromatischen Carbonsäuren, sowie einige heteroaromatische Säuren imstande sind, Viren, Bakterien und Pilze ohne Wirkungslücken, umfassend abzutöten oder zu inaktivieren.

Die gemäß den oben genannten Offenlegungs- und Patentschriften getesteten Keime waren überwiegend humanpathogene Erreger geringer Infektiosität, wie sie u.a. von der Deutschen Gesellschaft für Hygiene und Mikrobiologie (DGHM) und der Deutschen Veterinärmedizinischen Gesellschaft (DVG) als Testkeime empfohlen werden.

Die Anwendung der Lehre auf die hochinfektiösen und resistenten phytopathogenen Erreger, zeigte eine ebenso nachhaltige mikrobizide und virusinaktivierende Wirkung, wie sie bereits an den humanpathogenen Testkeimen dargestellt worden war.

Weitere Versuche zur Pflanzenverträglichkeit mit den gleichen Mitteln ergaben jedoch regelmäßig eine Schädigung der Testpflanzen in Form von schweren Verätzungen, so daß eine Anwendung an der Pflanze als aussichtslos erschien.

Aus der EP 0 091 213 war bekannt, daß pulverförmige Pestizide gegen Insekten oder Nematoden hergestellt werden können, die ein flüssiges Insektizid oder Nematozid und bestimmte Glykole wie Ethylen, Glykol, Propylenglykol, Triethylenglykol, Glycerin oder bestimmte Polyethylenglykole und ähnliche Verbindungen sowie ein inerten festen Träger enthalten und zum Bestäuben von Saatgut eingesetzt werden und nicht phytotoxisch sind.

Überraschend wurde nun gefunden, daß die Verwendung bestimmter Säure-Tensid - Kombinationen in Gegenwart von Glykolen; den bisher bestehenden Mangel bei der Bekämpfung von phytopathogenen Erregern überwindet und bei direkter Anwendung auf der Pflanze, unter Beibehaltung einer ausgeprägten bakteriziden, fungiziden und viruziden Wirksamkeit, die Pflanzenzellen (Wurzeln, Stengel, Blätter, Blüten und Früchte) in der Anwendungskonzentration unbeschädigt läßt.

Gegenstand der vorliegenden Erfindung sind Mittel zur Behandlung von Pflanzen und deren Umfeld mit dem Ziel, phytopathogene Bakterien, Pilze, Viren und Viroide abzutöten, bzw. deren'Verbreitung zu verhindern. Auch bereits auf

Pflanzen befindliche Pathogene können diese Mittel durch Benetzen von Wurzeln, Stengeln, Blättern und Blüten abtöten oder inaktivieren (Viren), ohne die Pflanzenzellen zu schädigen. Das biologische Verhalten der Pflanze wird durch die Behandlung ebenfalls nicht verändert. Bearbeitungsbereiche im Umfeld der Pflanze (z.B. Tische, Messer, Stellflächen), die zu einer Kontaminierung führen können, werden damit ebenfalls nachhaltig von Schadorganismen befreit, ohne daß anschließend phytotoxische Rückstände entfernt werden müssen.

Gegenstand der vorliegende Erfindung sind Mittel zur Behandlung von Pflanzen und deren Umfeld mit dem Ziel, phytopathogene Bakterien, Pilze, Viren und Viroide abzutöten, bzw. deren Verbreitung zu verhindern. Auch bereits auf Pflanzen befindliche Pathogene können diese Mittel durch Benetzen von Wurzeln, Stengeln, Blättern und Blüten abtöten oder inaktivieren (Viren), ohne die Pflanzenzellen zu schädigen. Das biologische Verhalten der Pflanze wird durch die Behandlung ebenfalls nicht verändert. Bearbeitungsbereiche im Umfeld der Pflanze (z.B. Tische, Messer, Stellflächen), die zu einer Kontaminierung führen können, werden damit ebenfalls nachhaltig von Schadorganismen befreit, ohne daß anschließend phytotoxische Rückstände entfernt werden müssen.

### Beispiele zur Formulierung der Mittel gemäß Patentanspruch

Nachfolgende Beispiele sollen den Patentanspruch erläutern, stellen aber keine Begrenzung des Anspruchs dar.

| Beispiel 1) | |
|---|---|
| Komponenten | Gewichtsanteile (%) |
| Alkylarylsulfonat-Kalium | 8,50 Gew. % |
| Propandiol-1,2 | 20,50 |
| Toluolsulfonat-Kalium | 10,00 |
| p-Hydroxybenzoesäure | 6,90 |
| Hydroxyethansäure | 3,80 |
| Propanol-2 - | 28,00 |
| Wasser (entsalzt) | 18,50 |

| Beispiel 2) | |
|---|---|
| Alkylsulfonat-Kalium, | 10,00 Gew. % |
| Ethandiol-1,2 | 15,00 |
| Cumolsulfonat-Kalium | 10,00 |
| p-Hydroxybenzoesäure | 6,90 |
| Oxoethansäure | 7,00 |
| Propanol-1 | 15,00 |
| Propanol-2 | 15,00 |
| Wasser (entsalzt) | 18,50 |

| Beispiel 3) | |
|---|---|
| Alkylarylsulfonat-Kalium | 12,00 Gew. % |
| Ethandiol-1,2 | 18,00 |
| Cumolsulfonat-Kalium | 8,00 |
| Benzoesäure | 7,00 |
| 2-Hydroxypropionsäure | 7,00 |
| Propanol-1 | 20,00 |
| Propanol-2 | 15,00 |
| Wasser (entsalzt) | 13,00 |

| Beispiel 4) | |
|---|---|
| Komponenten | Gewichtsanteile (%) |
| Alkylsulfonat(C8-C18)-Kalium | 7,00 Gew. % |
| Alkylsulfonat(C12)-Kalium | 3,00 |
| Ethandiol-1,2 | 12,00 |
| Cumolsulfonat-Kalium | 11,50 |
| Benzoesäure | 9,00 |
| 2-Hydroxyethansäure | 4,50 |
| Propanol-1 | 15,00 |
| Propanol-2 | 15,00 |
| Wasser (entsalzt) | 23,00 |

| Beispiel 5) | |
|---|---|
| Alkylarylsulfonat-Natrium | 12,00 Gew. % |
| Cumolsulfonat-Natrium | 8,00 |
| o-Hydroxybenzoesäure | 9,50 |
| 2-Hydroxypropionsäure | 5,00 |
| Propanol-1 | 22,00 |
| Propanol-2 | 20,00 |
| Wasser (entsalzt) | 23,50 |

### Bakterizide Wirkung auf der Pflanze (Biotest)

A Jungpflanzen (Pelargonien und Begonien) wurden mittels Sprühverfahren mit Xanthomonas campestris kontaminiert. Ein Blattfläche von 1 cm² wies nach der Kontamination 10⁴ KBE auf.

Eine Stunde nach der Inokulation erfolgte, ebenfalls im Sprühverfahren, eine Behandlung mit Beispiel 4 in Konzentrationen von: 1,0%; 2,0% und 3,0%.

Eine weitere Stunde nach der Behandlung wurden Proben entnommen. Die Keime der behandelten bzw. der unbehandelten Kontrollen (ohne Beispiel 4) wurden mittels Ultraschall (Waschflüssigkeit von 0°C) von den Blättern entfernt und deren Anzahl bestimmt.

**B** Pelargonien und Begonien wurden mittels Sprühverfahren mit Beispiel 4 behandelt.

24 Stunden nach der Behandlung mit Beispiel 4 erfolgte, ebenfalls im Sprühverfahren, die Kontamination mit Xanthomonas campestris (s.o. unter A)

Eine Stunde nach der Kontamination wurden Proben entnommen. Die Keime der behandelten bzw. der unbehandelten Kontrollen (ohne Beispiel 4) wurden mittels Ultraschall (Waschflüssigkeit von 0°C) von den Blättern entfernt und deren Anzahl bestimmt.

Verätzungen Läsionen an den Blatträndern und den Blattspreiten
Keimreduktion und Blattverträglichkeit sind in der folgenden Tabelle aufgeführt:

| | | **Pelargonien** | | **Begonien** | |
|---|---|---|---|---|---|
| **A** | **Konzentration (Vol.%)** | **Keimreduktion** | **Toxische Erscheinungen an Blättern** | **Keimreduktion** | **Toxische Erscheinungen an Blättern** |
| | 1,0% Beispiel 4 | 97%; 93 % | keine Läsionen | <99% | keine Läsionen |
| | 2,0% Beispiel 4 | 100%; 99,5% | keine Läsionen | 99,9% | keine Läsionen |
| | 3,0% Beispiel 4 | 100%; 99,9% | wenige Blattrandläsionen | 99,9% | geringe Läsionen an Blattranändern |
| | 1.0% Beispiel 5 | 98%; 95 % | Läsionen an den Blatträndern | 99,5%; 99,7% | Läsionen an den Blatträndern und Blanspreietn |
| | 2,0% Beispiel 5 | 100%;100% | Läsionen an den Blatträndern und den Blattspreiten | 99.9%. 99.9% | Verätzungen an den Blatträndern und den Blattspreiten |
| | 3,0% Beispiel 5 | 100%; 94% | viele Läsionen an den Blatträndem und den Blattspreiten | 100%, 100%% | Verätzungen an den Blatträndern und den Blattspreiten |
| **B** | 1.0% Beispiel 4 | 98% | keine Läsionen | 95% | keine Läsionen |

### Pflanzenverträglichkeit

### Maximale tolerierbare Konzentrationen der Formulierungsbeispiete 2, 4 und 5 an Pflanzenorganen

| **Beispiele** | **Pflanzenorgan** | **Phalaenopsis**^{**1**} | | |
|---|---|---|---|---|
| | | **Schädigung** | **Läsionen** | |
| | | | **BR** | **BS** |
| 1,0% Beispiel 2 | Blüten | 0 | | |
| 2,0% Beispiel 2 | | 0 | | |
| 3,0% Beispiel 2 | | 0 | | |
| 1,0% Beispiel 2 | Blätter | 0 | 0 | 0 |
| 2,0% Beispiel 2 | | 0 | 0 | 0 |
| 3.0% Beispiel 2 | | + | + | 0 |
| | | | | |
| 1,0% Beispiel 4 | Blüten | 0 | | |
| 2,0% Beispiel 4 | | 0 | | |
| 3,0% Beispiel 4 | | 0 | | |
| 1,0% Beispiel 4 | Blätter | 0 | 0 | 0 |
| 2,0% Beispiel 4 | | 0 | 0 | 0 |
| 3,0% Beispiel 4 | | + | ++ | 0 |
| | | | | |
| 1,0% Beispiel 5 | Blüten | ++ | | |
| 2,0% Beispiel 5 | | ++ | | |
| 3,0% Beispiel 5 | | +++ | +++ | +++ |
| 1,0% Beispiel 5 | Blätter | + | ++ | ++ |
| 2,0% Beispiel 5 | | ++ | +++ | ++ |
| 3,0% Beispiel 5 | | +++ | +++ | +++ |
| Läsion. = Läsionen +++ = sehr viele / sehr stark geschädigt ++ = viele / stark geschädigt + = wenige / wenig geschädigt | | | | |
| BR = Blattränder 0 = keine / nicht geschädigt | | | | |
| BS = Blattspreiten | | | | |

Die Prüfung auf eine ausreichende Inaktivierung von phytopathogenen Erregern führte zu folgenden Ergebnissen
1. Bakterizide Wirkung von Beispiel 1-5 im Laborsversuch nach der "Richtlinie 16-4 für die Prüfung von Pflanzenschutzmitteln zur Desinfektion im Zierpflanzenbau" der Biologischen Bundesanstalt für Land-und Forstwirtschaft (Braunschweig, 1986)

| Erforderliche Einwirkungszeiten von Beispiel 1-5 zur Abtötung der angegebenen Bakterienstämme | | | |
|---|---|---|---|
| **Beispiele** | **Xanthomonas pelargonii** | **Pseudomonas solanaceum** | **Erwinia amylovora** |
| Leitungswasser Kontrolle | keine Wirksamkeit | keine Wirksamkeit | keine Wirksamkeit |
| 1,0% Beispiel 1 | 1 Min | 1 Min | 5 Min |
| 1,0% Beispiel 2 | 1 Min | 1 Min | 1 Min |
| 1,0% Beispiel 3 | 5 Min | 5 Min | 15 Min |
| 1,0% Beispiel 4 | 1 Min | 1 Min | 1 Min |
| 1,0% Beispiel 5 | 1 Min | 1 Min | 1 Min |

2. Fungizide Wirkung von Beispiel 1-5 im Laborsversuch nach der "Richtlinie 16-4 für die Prüfung von Pflanzenschutzmitteln zur Desinfektion im Zierpflanzenbau" der Biologischen Bundesanstalt für Land-und Forstwirtschaft (Braunschweig, 1986)

| Erforderliche Einwirkungszeiten der Beispiele 1-5 zur Abtötung der angegebenen Pilzprüfstämme | | | | |
|---|---|---|---|---|
| **Beispiel** | **Fusarium oxysporum** | **Thielaviopsis basicola** | **Phythophtora sp** | **Cylindrocladium scoparium** |
| Leitungswasser Kontrolle | keine Wirksamkeit | keine Wirksamkeit | keine Wirksamkeit | keine Wirksamkeit |
| 1,0% Beispiel 1 | 16 h | >16 h | 1 h | >16 h |
| 2,0% Beispiel 1 | 4 h | 4 h | 1 h | >16 h |
| 1,0% Beispiel 2 | 4 h | 4 h | 1 h | >16 h |
| 2,0% Beispiel 2 | 1 h | 1 h | 5 Min. | 16 h |
| 1,0% Beispiel 3 | 4 h | 16 h | 1 h | 16 h |
| 2,0% Beispiel 3 | 4 h | 4 h | 30 Min. | 4 h |
| 1,0% Beispiel 4 | 1 h | 4 h | 30 Min. | 16 h |
| 2,0% Beispiel 4 | 1 h | 1 h | 15 Min. | 4 h |
| 1,0% Beispiel 5 | 1 h | 4 h | 1 h | 16 h |
| 2,0% Beispiel 5 | 1 h | 1 h | 5 Min. | 16 h |

| Erforderliche Einwirkungszeiten von Beispiel 1-5 zur Inaktivierung der angegebenen Virenstämme (Suspensionsversuch) | | | | | | |
|---|---|---|---|---|---|---|
| Desinfektionsmittel (Konz.) | TMV | PVY | PFBV | CNV | ORSV | PSTVd |
| Leitungswasser Kontrolle | keine Wirksamkeit | keine Wirksamkeit | keine Wirksamkeit | keine Wirksamkeit | keine Wirksamkeit | keine Wirksamkeit |
| 1,0%Beispiell 1 | 16h | 16 h | 4h | 16h | 4h | 4h |
| 2,0% Beispiel 1 | 16 h | 4 h | 1 h | 4 h | 1 h | 1 h |
| 3,0% Beispiel 1 | 16 h | 4 h | 1 h | 4 h | 1 h | <1 h |
| | | | | | | |
| 1,0% Beispiel 2 | >16 h | 16h | 4h | 16h | 1 h | 4 h |
| 2,0% Beispiel 2 | 16 h | 4 h | 1 h | 4 h | <1 h | 1 h |
| 3,0% Beispiel 2 | 4 h | 4 h | 1 h | 4 h | <1 h | 1 h |
| | | | | | | |
| 1,0% Beispiel 3 | >16 h | 16 h | 4 h | 1 h | 4 h | 4 h |
| 2,0% Beispiel 3 | 16 h | 4 h | 1 h | <1 h | 4 h | 1 h |
| 3,0% Beispiel 3 | 16 h | 4 h | 1 h | <1 h | 1 h | 1 h |
| | | | | | | |
| 1,0% Beispiel 4 | 4 h | 4 h | 1 h | <1 h | 4 h | 1 h |
| 2,0% Beispiel 4 | 4 h | 1 h | < 1 h | <1 h | 1 h | < 1 h |
| 3,0% Beispiel 4 | 1 h | 1 h | < 1 h | <1 h | 1 h | < 1 h |
| | | | | | | |
| 1,0% Beispiel 5 | 4 h | 4 h | 1 h | < h | 4 h | 1 h |
| 2,0% Beispiel 5 | 4 h | 4 h | 1 h | <1 h | 1 h | 1 h |
| 3,0% Beispiel 5 | 1 h | 1 h | < 1 h | <1 h | 1 h | < 1 h |
| | | | | | | |
| **TMV** = Tabakmosaicvirus | | | | | | |
| **PVY** = Potato virus Y Potyvirus | | | | | | |
| **PFBV** = Pelargonium flower break carmovirus | | | | | | |
| **CNV** = Cucumber necrosis tombuvirus | | | | | | |
| **ORSV** = Odontoglossum ringspot virus | | | | | | |
| **PSTVd** = Potato spindle tuber viroid | | | | | | |

Die Prüfung auf eine ausreichende Inaktivierung von phytopathogenen Erregern führte zu folgenden Ergebnissen
1.Bakterizide Wirkung von Beispiel 1-5 im Laborsversuch nach der "Richtlinie 16-4 für die Prüfung von Pflanzenschutzmitteln zur Desinfektion im Zierpflanzenbau" der Biologischen Bundesanstalt für Land-und Forstwirtschaft (Braunschweig, 1986)

| Erforderliche Einwirkungszeiten von Beispiel 1-5 zur Abtötung der angegebenen Bakterienstämme | | | |
|---|---|---|---|
| Beispiele | Xanthomonas pelargonii | Pseudomonas solanaceum | Erwinia amylovora |
| Leitungswasser Kontrolle | keine Wirksamkeit | keine Wirksamkeit | keine Wirksamkeit |
| 1,0% Beispiel 1 | 1 Min | 1 Min | 5 Min |
| 1,0% Beispiel 2 | 1 Min | 1 Min | 1 Min |
| 1,0% Beispiel 3 | 5 Min | 5 Min | 15 Min |
| 1.0% Beispiel 4 | 1 Min | 1 Min | 1 Min |
| 1,0% Beispiel 5 | 1 Min | 1 Min | 1 Min |

## Patentansprüche

1. Desinfektionsmittel zur Bekämpfung und Inaktivierung von phytopathogenen Erregern zur Anwendung an Pflanzen und im Umfeld der Pflanzen mit einem Gehalt an anionischen Tensiden, aliphatischen und aromatischen Carbonsäuren in wässriger oder wässrig-alkoholischer Lösung, **dadurch gekennzeichnet, daß** sie Mono-, Di- und/oder Triglykole enthalten.

2. Desinfektionsmittel nach Anspruch 1, **dadurch gekennzeichnet, daß** sie aliphatische und aromatische Carbonsäuren, vorzugsweise synergistisch wirksamemikrobizide Kombinationen aus aliphatischen und aromatischen Carbonsäuren, vorzugsweise Methansäure, Ethansäure, Propansäure, Hydroxyethansäure, 2-Hydroxypropionsäure, Oxoethansäure, 2-Oxopropionsäure, 4-Oxovaleriansäure, Benzoesäure, o-, m-, p-Hydroxybenzoesäuren, 3,4,5-Tri-Hydroxybenzoesäure, einzeln oder gemischt, in Verbindung mit Alkylsulfonaten und/oder Alkylarylsulfonaten und deren Natrium-, Kalium- und Ammoniumsalze, mit primären Ketten der Länge C8-C18 als anionische Tenside enthalten.

3. Desinfektionsmittel nach Anspruch 1 oder 2, **dadurch gekennzeichnet, daß** sie Ethylenglykol, Propylenglykol, 2,3-Butylenglykol, Diethylenglykol [ 2,2'-Dihydroxy-diethylether ], Triethylenglykol [ (1,2-Di 2-hydroxyethoxyl -ethan ] einzeln oder im Gemisch miteinander enthalten.

4. Desinfektionsmittel nach Anspruch 1 bis 3, **dadurch gekennzeichnet, daß** sie Hydrotropierungsmittel, insbesondere Toluolsulfonat und/oder Cumolsulfonat als Natrium- oder Kaliumsalze und primäre und/oder sekundäre, aliphatische einwertige Alkohole der Kettenlänge C2-C8, vorzugsweise einwertige Alkohole, einzeln oder als Gemisch enthalten.

5. Desinfektionsmittel nach Ansspruch 1 bis 4, **dadurch gekennzeichnet, daß** das Gewichtsverhältnis der aliphatischen Säuren (A) zu den aromatischen Säuren (B) zwischen 1:9 und 9:1 betragen kann und deren Summe zwischen 5 und 40 Gew. % bezogen auf das Gesamtgewicht des Desinfektionsmittelkonzentrats liegen kann.

6. Desinfektionsmittel nach Anspruch 1 bis 5, **dadurch gekennzeichnet, daß** das Gewichtsverhältnis der Alkylsulfonate und/oder Alkylarylsulfonate und deren Salze (C) mit den Säuren (A+B) im Verhältnis C: (B+A) = 1:9 und 9:1 liegen kann und deren Summe zwischen 10 und 60% bezogen auf das Gesamtgewicht des Desinfektionsmittelkonzentrats betragen kann.

7. Desinfektionsmittel nach Anspruch 1 bis 6, **dadurch gekennzeichnet, daß** der Gewichtsanteil der Glykole bezogen auf das Gesamtgewicht des Desinfektionsmittelkonzentrats zwischen 10 und 40 Gew. % betragen kann.

8. Desinfektionsmittel nach Anspruch 1 bis 7, **dadurch gekennzeichnet, daß** das Gewichtsverhältnis der Hydrotropierungsmittel Toluolsulfonate und Cumosulfonat, deren Natrium- oder Kaliumsalze, einzeln oder im Gemisch miteinander zwischen 5 und 40 Gew. % bezogen auf das Gesamtgewicht des Desinfektionsmittelkonzentrats liegen kann.

9. Desinfektionsmittel nach Anspruch 1 bis 8 **dadurch gekennzeichnet, daß** das Gewichtsverhältnis der einwertigen Alkohole einzeln oder im Gemisch miteinander zwischen 5 und 60 Gew. % bezogen auf das Gesamtgewicht des Desinfektionsmittelkonzentrats liegen kann.

10. Verwendung der Desinfektionsmittel nach Anspruch 1 bis 9 zur Bekämpfung von phytopathogenen Mikroorganismen auf der vitalen Pflanze oder in deren Umfeld, **gekennzeichnet durch** einen Gehalt von 0,5 bis 10 Gew. % des Desinfektionsmittelkonzentrats in wässrigen verdünnten Lösungen.

## Claims

1. Disinfectants for controlling and inactivating phytopathogenic pathogens for use on plants and in the area around plants, having a content of anionic tensides, aliphatic and aromatic carboxylic acids in aqueous or aqueous-alcoholic solution, **characterised in that** they contain monoglycols, diglycols and/or triglycols.

2. Disinfectants according to Claim 1, **characterised in that** they contain aliphatic and aromatic carboxylic acids, preferably synergistically active microbicidal combinations of aliphatic and aromatic carboxylic acids, preferably methanoic acid, ethanoic acid, propanoic acid, hydroxyethanoic acid, 2-hydroxypropionic acid, oxoethanoic acid, 2-oxopropionic acid, 4-oxovalerianic acid, benzoic acid, o-, m-, p-hydroxybenzoic acids, 3,4,5-trihydroxybenzoic acids, individually or mixed, in combination with alkyl sulfonates and/or alkyl aryl sulfonates and their sodium, potassium and ammonium salts, with primary chains C8-C 18 in length as anionic tensides.

3. Disinfectants according to Claim 1 or 2, **characterised in that** they contain ethylene glycol, propylene glycol, 2,3-butylene glycol, diethylene glycol [2,2'-dihydroxydiethyl ether], triethylene glycol [(1,2-di-2-hydroxy ethoxy ethane], individually or in mixture with one another.

4. Disinfectants according to Claims 1 to 3, **characterised in that** they contain hydrotroping agents, in particular toluene sulfonate and/or cumene sulfonate as sodium or potassium salts and primary and/or secondary aliphatic univalent alcohols of chain length C2-C8, preferably univalent alcohols, individually or as a mixture.

5. Disinfectants according to Claims 1 to 4, **characterised in that** the weight ratio of the aliphatic acids (A) to the aromatic acids (B) may be between 1:9 and 9:1 and their sum may lie between 5 and 40 wt. % with reference to the total weight of the disinfectant concentrate.

6. Disinfectants according to Claims 1 to 5, **characterised in that** the weight ratio of the alkyl sulfonates and/or alkyl aryl sulfonates and their salts (C) to the acids (A+B) may be in the ratio C: (B+A) = 1: 9 and 9:1 and their sum may be between 10 and 60 % with reference to the total weight of the disinfectant concentrate.

7. Disinfectants according to Claims 1 to 6, **characterised in that** the proportion of the glycols by weight with reference to the total weight of the disinfectant concentrate may be between 10 and 40 wt. %.

8. Disinfectants according to Claims 1 to 7, **characterised in that** the weight ratio of the hydrotroping agents toluene sulfonate and cumene sulfonate, their sodium or potassium salts, individually or in mixture with one another, may lie between 5 and 40 wt. % with reference to the total weight of the disinfectant concentrate.

9. Disinfectants according to Claims 1 to 8, **characterised in that** the weight ratio of the univalent alcohols, individually or in mixture with one another, may lie between 5 and 60 wt. % with reference to the total weight of the disinfectant concentrate.

10. Use of the disinfectants according to Claims 1 to 9 for controlling phytopathogenic microorganisms on vital plants or in the area around them, **characterised by** a content of 0.5 to 10 wt. % of the disinfectant concentrate in dilute aqueous solutions.

## Revendications

1. Agents désinfectants permettant de lutter contre des agents phyto-pathogènes et de les inactiver, destinés à être appliqués sur des plantes et dans leur environnement et contenant des tensioactifs anioniques et des acides carboxyliques aliphatiques ou aromatiques en solution aqueuse ou aqueuse-alcoolique, **caractérisés en ce qu'**ils contiennent des monoglycols, des diglycols et/ou des triglycols.

2. Agents désinfectants conformes à la revendication 1, **caractérisés en ce qu'**ils contiennent des acides carboxyliques aliphatiques ou aromatiques, de préférence des combinaisons microbicides à effet synergique d'acides carboxyliques aliphatiques ou aromatiques, en particulier, acide méthanoïque, acide éthanoïque, acide propanoïque, acide hydroxyéthanoïque, acide 2-hydroxypropionique, acide oxoéthanoïque, acide 2-oxopropionique, acide 4-oxovalérique, acide benzoïque, acide o-, m- ou p-hydroxybenzoïque, acide 3,4,5-trihydroxybenzoïque, seuls ou à l'état de mélange, en combinaison avec, en tant que tensioactifs anioniques, des alkylsulfonates et/ou alkyl-arylsulfonates et leurs sels de sodium, potassium ou ammonium, dont les chaînes primaires sont longues de 8 à 18 atomes de carbone.

3. Agents désinfectants conformes à la revendication 1 ou 2, **caractérisés en ce qu'**ils contiennent de l'éthylèneglycol, du propylèneglycol, du 2,3-butylèneglycol, du diéthylèneglycol (2,2'-dihydroxy-diéthyléther) ou du triéthylèneglycol (1,2-bis(2-hydroxyéthoxy)éthane), seuls ou en mélange.

4. Agents désinfectants conformes à l'une des revendications 1 à 3, **caractérisés en ce qu'**ils contiennent des agents d'hydrotropie, en particulier des toluènesulfonates et/ou des cumènesulfonates à l'état de sels de sodium ou de potassium et des monoalcools aliphatiques primaires et/ou secondaires dont les chaînes sont longues de 2 à 8 atomes de carbone, et de préférence des monoalcools, seuls ou en mélange.

5. Agents désinfectants conformes à l'une des revendications 1 à 4, **caractérisés en ce que** le rapport pondéral des acides aliphatiques (A) aux acides aromatiques (B) peut valoir de 1/9 à 9/1, et **en ce que** la quantité totale de ces acides peut représenter de 5 à 40 % du poids total du concentré d'agent désinfectant.

6. Agents désinfectants conformes à l'une des revendications 1 à 5, **caractérisés en ce que** le rapport pondéral des alkylsulfonates et/ou alkyl-arylsulfonates et leurs sels (C) aux acides (A et B), C/(A+B), peut valoir de 1/9 à 9/1, et **en ce que** leur quantité totale peut représenter de 10 à 60 % du poids total du concentré d'agent désinfectant.

7. Agents désinfectants conformes à l'une des revendications 1 à 6, **caractérisés en ce que** la quantité de glycols peut représenter de 10 à 40 % du poids total du concentré d'agent désinfectant.

8. Agents désinfectants conformes à l'une des revendications 1 à 7, **caractérisés en ce que** la quantité des agents d'hydrotropie que sont les toluènesulfonates et/ou cumènesulfonates et leurs sels de sodium ou de potassium, seuls ou en mélange, peut représenter de 5 à 40 % du poids total du concentré d'agent désinfectant.

9. Agents désinfectants conformes à l'une des revendications 1 à 8, **caractérisés en ce que** la quantité des monoalcools, seuls ou en mélange, peut représenter de 5 à 60 % du poids total du concentré d'agent désinfectant.

10. Emploi d'agents désinfectants, conformes à l'une des revendications 1 à 9, pour lutter contre des microorganismes phytopathogènes, par application sur des plantes vivaces ou dans leur environnement, **caractérisé en ce qu'**on utilise des solutions aqueuses diluées contenant de 0,5 à 10 % en poids de concentré d'agent désinfectant.
